# EUROPÄISCHE PATENTSCHRIFT

(11) **EP 1 187 734 B1**
(45) Veröffentlichungstag und Bekanntmachung des Hinweises auf die Patenterteilung: **14.06.2006**
(21) Anmeldenummer: 01933801.1
(22) Anmeldetag: 06.04.2001
(51) Int. Cl.: B60J 5/04

(54) **FAHRZEUGTÜR MIT TÜRKASTEN UND VERFAHREN ZUR HERSTELLUNG**
VEHICLE DOOR WITH DOOR CASING AND METHOD FOR THE PRODUCTION THEREOF
PORTIERE DE VEHICULES AVEC CHASSIS ET PROCEDE PERMETTANT DE PRODUIRE LADITE PIECE

(30) Priorität: 12.04.2000 DE 10018186
(43) Veröffentlichungstag der Anmeldung: 20.03.2002
(73) Patentinhaber: Acts Gmbh & Co. KG, 63877 Sailauf (DE)
(72) Erfinder: SCHÜTT, Stephan, 63773 Goldbach (DE); MORBACH, Nick, 63739 Aschaffenburg (DE); LUDWIG, Sven, 97084 Würzburg (DE); KARL, Steffen, 97833 Frammersbach (DE)
(74) Vertreter: Podszus, Burghart
(86) Internationale Anmeldenummer: PCT/EP2001/003977
(87) Internationale Veröffentlichungsnummer: WO 2001/076900

(56) Entgegenhaltungen:
- EP-A- 0 370 342
- EP-A- 0 495 712
- EP-A- 0 773 126
- US-A- 5 040 334

## Beschreibung

Die Erfindung betrifft eine Fahrzeugtür mit einem Türkasten sowie ein Verfahren zur Herstellung einer derartigen Fahrzeugtür.

Bei bekannten Fahrzeugtüren wird der Türkasten auf seiner dem Fahrzeuginnenraum zugewandten Seite durch ein schalenförmig ausgebildetes massives Türinnenblech gebildet, welches zur Außenseite der Fahrzeugtür hin durch eine Türaußenhaut verschlossen ist, die beispielsweise durch Umbördeln und Verkleben mit dem Türinnenblech verbunden wird. Die sich im Inneren der Tür befindlichen Türkomponenten, wie Fensterhebermotor, Seitenaufprallschutzträger, Leitungen und Gestänge für das Schloß und dessen Anbindung an den Türgriff etc., sind dabei üblicherweise von der Fahrzeuginnenseite durch entsprechende Ausnehmungen des Türinnenbleches zugänglich. Diese Ausnehmungen werden durch eine tragende Türinnenverkleidung abgedeckt, die ihrerseits Strukturteile, wie die Armauflage, den Zuziehgriff oder die Halterung für die Türinnenbetätigung, umfaßt und daher als steifes tragendes Teil ausgebildet sein muß.

Nachteilig bei derartigen bekannten Türen ist unter anderem, daß die diversen in dem Türinnenblech vorhandenen Durchbrüche relativ aufwendig mittels zusätzlicher Dichtbahnen abgedichtet werden müssen, damit das bei starkem Regen etwa über den Fensterschlitz in den Türkasten gelangende Wasser nicht auch in den Fahrzeuginnenraum gelangen kann.

Aus der EP 0 370 342 ist ein auch bei Kraftfahrzeugen einsetzbares Leichtbauteil mit hohen Festigkeitseigenschaften bekannt, welches aus einem schalenförmigen Grundkörper besteht, in dessen Innenraum Verstärkungsrippen aus angespritztem Kunststoff vorgesehen sind. Dabei erfolgt die Verbindung der Verstärkungsrippen mit dem Grundkörper an diskreten Verbindungsstellen über Durchbrüche im Grundkörper, durch welche der Kunststoff hindurch- und über die Flächen der Durchbrüche hinausragt.

Der Erfindung liegt die Aufgabe zugrunde, eine Fahrzeugtür anzugeben, bei der auf einfache Weise sicher vermieden wird, daß Feuchtigkeit aus dem Türkasten in den Fahrzeuginnenraum gelangt. Der Erfindung liegt ferner die Aufgabe zugrunde, ein Verfahren zur Herstellung einer derartigen Fahrzeugtür zu offenbaren.

Diese Aufgabe wird erfindungsgemäß hinsichtlich der Fahrzeugtür durch die Merkmale des Anspruchs 1 und hinsichtlich des Verfahrens durch die Merkmale der Ansprüche 7 und 8 gelöst. Weitere, besonders vorteilhafte Ausgestaltungen der Erfindung offenbaren die Unteransprüche.

Die Erfindung beruht im wesentlichen auf dem Gedanken, das Türinnenblech von seiner der Außenhaut zugewandten Seite mit einem Kunststoffträgerteil zu verbinden, welches mit Befestigungselementen versehen ist, die die im Türkasten anzuordnenden Türkomponenten tragen und an dem Türinnenblech die in den Fahrzeuginnenraum ragenden Strukturelemente der Fahrzeugtür zu befestigen. Die Montage und Demontage der in dem Innenraum des Türkastens befindlichen Türkomponenten erfolgt -anders als bei herkömmlichen Fahrzeugtüren- von der Türaußenseite (z.B. durch ein aufziehbares Türaußenblech).

Bei einer derartigen Fahrzeugtür, bei der die im Türkasten befindlichen Komponenten von der Außenseite zugänglich sind, können die Durchbrüche in dem Türinnenblech gering gehalten werden und dienen im wesentlichen nur zur Befestigung der in den Fahrzeuginnenraum ragenden Strukturelemente. Diese Durchbrüche lassen sich auf einfache Weise gegen Feuchtigkeit abdichten.

Ein weiterer wesentlicher Vorteil der erfindungsgemäßen Fahrzeugtür besteht darin, daß durch Verwendung des Kunststoffträgerteiles die Blechstärke des Türinnenbleches wesentlich geringer gewählt werden kann, als bei herkömmlichen Schalentüren, da bei dem Spritzvorgang entsprechende kritische Bereiche des Innenbleches durch Kunststoff verstärkt werden können.

Der erfindungsgemäße Türaufbau läßt sich auf einfache Weise dadurch realisieren, daß das Kunststoffträgerteil, nach einer Vormontage der Kunststoff-Strukturteile an dem Innenblech, durch Spritzgießen auf das z.B. tiefgezogene schalenförmige Innenblech zusammen mit den Befestigungselementen für die Türkomponenten aufgebracht wird. Dabei erfolgt die Verbindung des Trägerteiles mit dem Innenblech an diskreten Verbindungsstellen über Durchbrüche im Innenblech, durch welche der Kunststoff hindurch- und über die Flächen der Durchbrüche hinausreicht.

Um eine möglichst leichte Fahrzeugtür mit hohen Festigkeitseigenschaften zu erhalten, hat es sich als vorteilhaft erwiesen, wenn das Kunststoffträgerteil mindestens in Teilbereichen mit wabenförmig angeordneten Verstärkungsrippen versehen wird, ähnlich wie dieses in der eingangs erwähnten EP 0 370 342 A2 offenbart wird.

Da sämtliche in den Fahrzeuginnenraum ragenden Strukturelemente an dem Türinnenblech und nicht an der Türinnenverkleidung fixiert sind, kann auf eine herkömmliche Türinnenverkleidung entweder ganz verzichtet werden oder es genügt aus ästhetischen Gründen die Verwendung einer nicht selbsttragenden Verblendung für die Abdeckung der Befestigungsdurchbrüche für das Kunststoffträgerteil bzw. für die Armauflage, den Zuziehgriff etc.

Weitere Einzelheiten und Vorteile der Erfindung ergeben sich aus dem folgenden anhand von Figuren erläuterten Ausführungsbeispiel. Es zeigen:
Fig. 1 eine perspektivische Ansicht eines schalenförmig ausgebildeten Türinnenbleches mit mehreren daran zu befestigenden Türkomponenten -von der Außenseite gesehen- vor dem Kunststoff-Spritzvorgang zum Einbringen eines Kunststoffträgerteiles;
Fig.2 das Fig.1 entsprechende Türinnenblech nach dem Einbringen des Kunststoffträgerteiles;
Fig.3 das Fig.2 entsprechende Türinnenblech -von dem Innenraum des entsprechenden Kraftfahrzeuges aus gesehen- vor dem Befestigen einer Türinnenverkleidung und
Fig.4 ein in einem Spritzwerkzeug befindliches Türinnenblech nach dem Anspritzen der in den Fahrzeuginnenraum ragenden Türkomponenten.

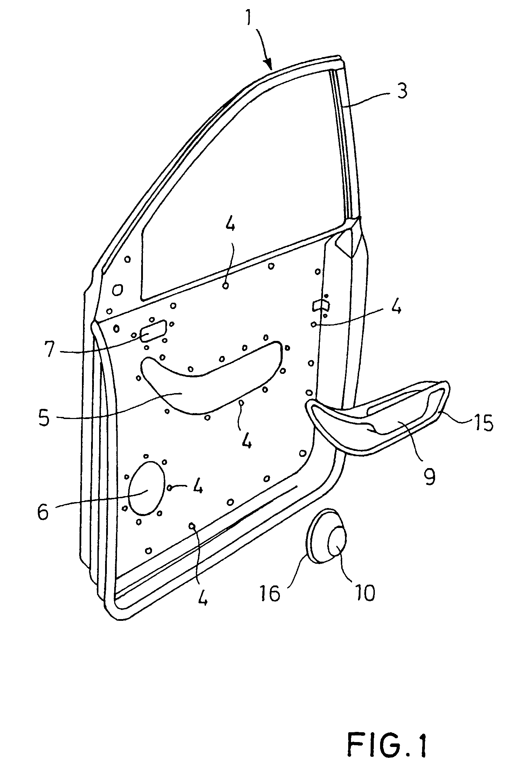

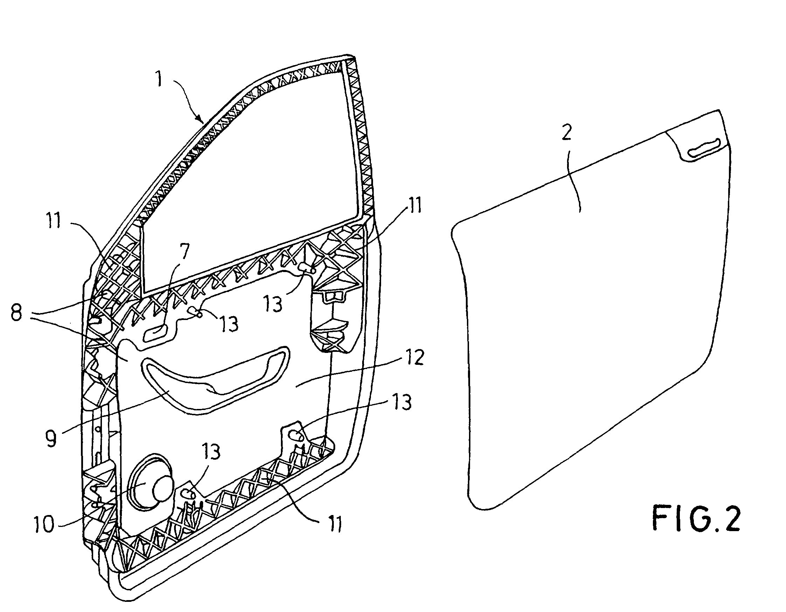

In den Fig. 1 bis 3 ist mit 1 ein schalenförmig ausgebildetes Türinnenblech bezeichnet, welches sowohl die dem Fahrzeuginnenraum zugewandte Seite eines Türkastens bildet, welcher durch eine Türaußenhaut 2 (Fig.2) verschlossen wird, als auch ein Fensterrahmenprofil 3 umfaßt. In dem Türinnenblech 1 sind eine Reihe von Durchbrüchen 4-7 vorgesehen. Dabei dienen die Durchbrüche 4 zur Befestigung eines Kunststoffträgerteiles 8 (Fig.2), der Durchbruch 5 zur Hindurchführung einer Armauflage 9 mit Zuziehgriff und der Durchbruch 6 stellt eine Öffnung für einen Lautsprecher 10 dar. Der Durchbruch 7 schließlich dient zur Durchführung der nicht dargestellten Innenhandhabe.

Nach Fixierung der Armauflage 9 und des Lautsprechers 10 wird mittels eines entsprechenden Formwerkzeuges ein geeigneter Kunststoff (z.B. glasfaserverstärktes Polyamid 6, Propylen etc.) mittels einer Spritzgießmaschine in das schalenförmige Türinnenblech 1 gespritzt. Dabei ist das Formwerkzeug derart gewählt, daß das sich nach dem Spritzgießvorgang ergebende Kunststoffträgerteil 8 in Teilbereichen 11 wabenförmig angeordnete Verstärkungsrippen und in Teilbereichen 12 durchgehende Flächen aufweist. Außerdem ist das Formwerkzeug derart gewählt, daß sich an dem Kunststoffträgerteil 8 Befestigungselemente 13, z.B. Schraubdome für Seitenaufpralldämpfer etc., ergeben.

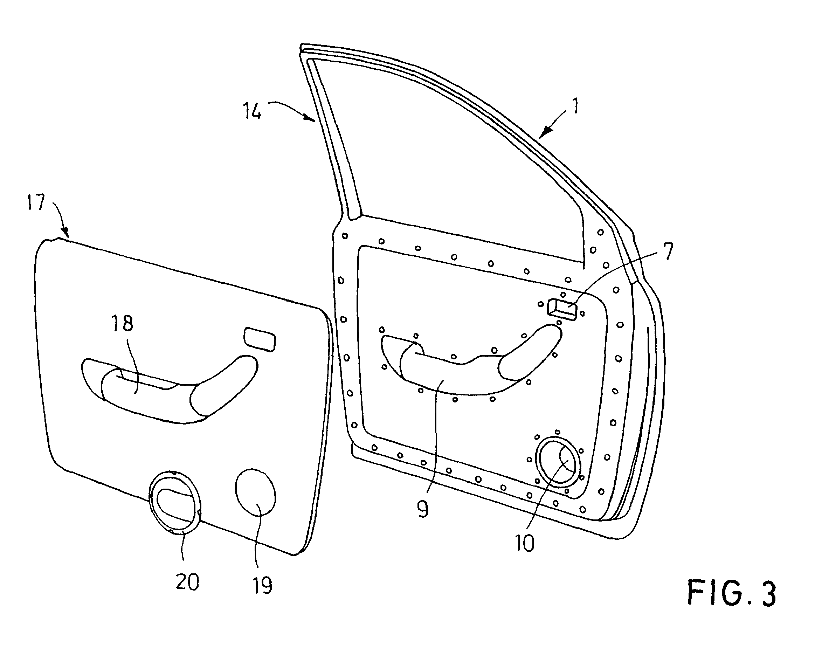

Bei dem Spritzgießvorgang wird der teigige Kunststoff durch die Durchbrüche 4 (Fig.1) hindurch- und in nicht dargestellte sickenförmige Einbuchtungen hineingedrückt, die auf der Rückseite 14 des Türinnenbleches 1 (Fig.3) um den jeweiligen Durchbruch 4 herum angeordnet sind, so daß das Kunststoffträgerteil 8 nach dem Spritzgießvorgang fest mit dem Türinnenblech 1 verbunden ist.

Bei dem Spritzgießvorgang werden gleichzeitig die Armauflage 9 und der Lautsprecher 10 an dem Türinnenblech 1 befestigt. Hierzu weisen diese Strukturelemente Randbereiche 15, 16 auf, die einerseits ein Hindurchgleiten durch die entsprechenden Durchbrüche 5 und 6 in den Fahrzeuginnenraum verhindern und die andererseits nach dem Spritzgießvorgang teilweise durch das Kunststoffträgerteil 8 überdeckt werden. Dadurch werden diese Strukturelemente gegen das Türinnenblech 1 gedrückt und an diesem befestigt. Die eventuellen zwischen dem jeweiligen Strukturelement und dem Durchbruch verbleibenden spaltförmigen Öffnungen werden bei dem Spritzgießvorgang durch entsprechende Kunststoffmasse geschlossen.

Das Formwerkzeug ist schließlich derart gewählt, daß der für die Innenbetätigung vorgesehene Durchbruch 7 bei dem Spritzgießvorgang offengelassen wird.

Nach Herstellung des in dem Türinnenblech 1 befestigten Kunststoffträgerteiles 8 werden die entsprechenden Türkomponenten, wie Seitenaufprallschutzträger, Schachtleiste, Fensterführungsschiene, Fensterhebermotor, elektrische Leitungen etc., an den dafür vorgesehen Befestigungselementen 13 des Kunststoffträgerteiles 8 angeordnet. Anschließend wird die Türaußenhaut 2 (Fig.2) auf das Türinnenblech 1 z.B. aufgeschoben und der Türaußengriff befestigt.

Abschließend kann dann -falls gewünscht- noch eine Türinnenverkleidung 17 (Fig.3) an dem Türinnenblech 1 befestigt werden. Diese weist eine Ausbuchtung 18 für die Armauflage 9 sowie eine Öffnung 19 für den Lautsprecher auf, wobei die Öffnung 19 durch eine separate Lautsprecherblende 20 verschließbar ist.

Die Erfindung ist selbstverständlich nicht auf das vorstehend beschriebene Ausführungsbeispiel beschränkt. So muß beispielsweise das Kunststoffträgerteil nicht zwingend gerippte Bereiche aufweisen. Außerdem können in dem schalenförmigen Bereich des Türinnenbleches auch mehrere voneinander getrennte Kunststoffträgerteile vorgesehen sein.

Außerdem müssen nicht alle in dem Türkasten anzuordnende Türkomponente zwingend an Befestigungselementen des Kunststoffträgerteiles befestigt werden. Denkbar ist auch, daß für besonders stark beanspruchte Bauteile, wie die Seitenaufpralldämpfer, eine entsprechende Befestigung an dem Türinnenblech vorgesehen ist (z.B. an metallischen Schraubdomen, die von dem Kunststoffträgerteil umschlossen werden).

Ferner können beispielsweise auch weitere in den Fahrzeuginnenraum ragende Strukturelemente, wie ein Ablagefach, ein Aschenbecher oder die Griffschale der Innenbetätigung etc., beim Spritzgießen an dem Türinnenblech durch das Kunststoffträgerteil befestigt werden. Sofern eine separate Versteifung des Fensterrahmens nicht erforderlich sein sollte, kann auf ein Anspritzen von Kunststoffrippen in diesem Bereich verzichtet werden.

Als besonders vorteilhaft hat es sich ferner erwiesen, wenn die in den Fahrzeuginnenraum ragenden Strukturelemente nicht vorgefertigt und durch das Spritzgießen des Kunststoffträgerteiles befestigt werden, sondern wenn die Herstellung der Strukturelemente gleichzeitig mit der Herstellung des Kunststoffträgerteiles erfolgt.

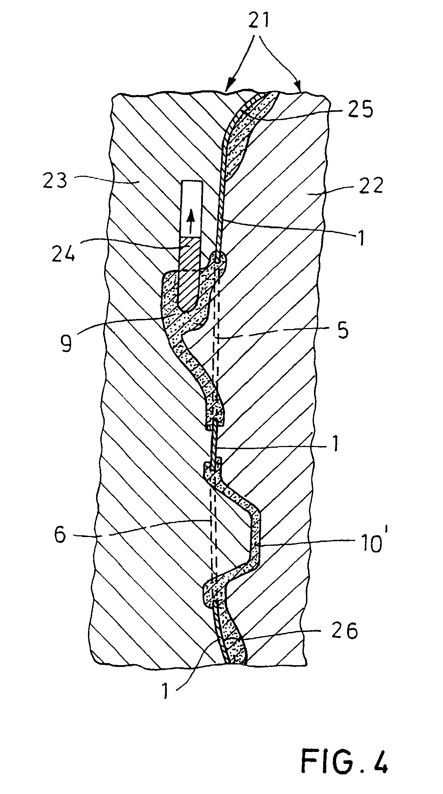

Dieser Vorgang ist in Fig.4 angedeutet, die ein in einem Spritzgießwerkzeug 21 mit den Werkzeughälften 22 und 23 befindliches Türinnenblech 1 nach dem Spritzgießen zeigt. Das Türinnenblech 1 weist wiederum mit 5 und 6 bezeichnete Durchbrüche für eine Armauflage 9 und für eine Lautsprecheraufnahme 10' auf.

Nach dem Schließen der beiden Werkzeughälften 22, 23 verbleiben in der Trennebene der Werkzeughälften den Strukturelementen 9 und 10' entsprechende Werkzeughohlräume, welche die Randbereiche der Durchbrüche 5 und 6 des Türinnenbleches 1 mindestens in Teilbereichen überdecken. Wird daher anschließend der Kunststoff über ein entsprechendes Angußsystem in die Werkzeughohlräume gespritzt, so werden die Randbereiche der Durchbrüche 5, 6 umspritzt, so daß die Strukturelemente 9, 10' nach dem Entformen von dem Türinnenblech 1 gehalten und die Durchbrüche gegen Feuchtigkeit abgedichtet werden.

Zum Einbringen einer Einwölbung in der Armauflage kann beispielsweise ein in Fig.4 mit 24 bezeichneter Schieber verwendet werden.

Wie in Fig. 4 ebenfalls angedeutet, befinden sich weitere Werkzeughohlräume im Bereich stark beanspruchter Abschnitte 25, 26 des Türinnenbleches 1, so daß nach dem Spritzgießen diese Abschnitte ebenfalls durch Kunststoff verstärkt sind.

## Patentansprüche

1. Fahrzeugtür mit einem Türkasten mit den Merkmalen:
a) der Türkasten weist auf seiner dem Fahrzeuginnenraum zugewandten Seite ein schalenförmig ausgebildetes Türinnenblech (1) auf, welches zur Außenseite der Fahrzeugtür hin durch eine auswechselbare Türaußenhaut (2) verschlossen ist,
b) an dem Türinnenblech (1) ist auf der der Türaußenhaut (2) zugewandten Seite mindestens ein Kunststoffträgerteil (8) angespritzt, dessen Verbindung mit dem Türinnenblech (1) an diskreten Verbindungsstellen über Durchbrüche (4) im Türinnenblech (1) erfolgt, durch welche der Kunststoff hindurch- und auf deren Rückseite er über die Flächen der Durchbrüche hinausragt;
c) an dem Kunststoffträgerteil (8) sind Befestigungselemente (13) für in dem Türkasten angeordnete Türkomponenten vorgesehen;
d) in den Fahrzeuginnenraum ragende oder von dem Fahrzeuginnenraum zugängliche Strukturelemente (9,10,10') sind im Bereich entsprechender Durchbrüche (5-7) des Türinnenbleches (1) an diesem Blech befestigt, derart, daß keine Feuchtigkeit aus dem Türkasten in den Fahrzeuginnenraum gelangen kann.

2. Fahrzeugtür nach Anspruch 1, **dadurch gekennzeichnet, daß** das Kunststoffträgerteil (8) wabenförmig angeordnete Verstärkungsrippen aufweist.

3. Fahrzeugtür nach Anspruch 1 oder 2, **dadurch gekennzeichnet, daß** die Abmessungen des Kunststoffträgerteiles (8) derart gewählt sind, daß das Kunststoffträgerteil seitlich durch die Seitenwände des Türinnenbleches (1) begrenzt wird.

4. Fahrzeugtür nach Anspruch 1 oder 2, **dadurch gekennzeichnet, daß** es sich bei den an dem Kunststoffträgerteil (8) angespritzten Befestigungselementen (13) um Schraubdome handelt.

5. Fahrzeugtür nach einem der Ansprüche 1 bis 4, **dadurch gekennzeichnet, daß** an dem Türinnenblech (1) auf der dem Fahrzeuginnenraum zugewandten Seite eine formstabile, sich selbst nicht tragende Türinnenverkleidung (17) zur Verblendung der in den Fahrzeuginnenraum ragenden Türkomponenten angeordnet ist.

6. Fahrzeugtür nach einem der Ansprüche 1 bis 5, **dadurch gekennzeichnet, daß** die an dem Türinnenblech (1) befestigten Strukturelemente (9,10) Randbereiche (15,16) aufweisen, die auf der dem Kunststoffträgerteil (8) zugewandten Seite des Türinnenbleches (1) anliegen und die entsprechenden Durchbrüche (5,6) abdecken.

7. Verfahren zur Herstellung einer Fahrzeugtür nach einem der Ansprüche 1 bis 6, **dadurch gekennzeichnet, daß** in ein mit entsprechenden Durchbrüchen (4-7) versehenes, schalenförmig ausgebildetes Türinnenblech (1) die in den Fahrzeuginnenraum ragenden Strukturelemente (9,10) eingebracht und provisorisch fixiert werden, daß dann mittels eines entsprechenden Formwerkzeuges Kunststoff durch Spritzgießen in das Türinnenblech (1) gespritzt und die Strukturelemente (9,10) sowie das beim Spritzgießen gebildete Kunststoffträgerteil selbst an dem Türinnenblech (1) befestigt werden, wobei der Spritzdruck derart gewählt wird, daß die Kunststoffmasse die zwischen den Durchbrüchen (4-7) und den Strukturelementen (9,10) gegebenenfalls bestehenden spaltförmigen Öffnungen sicher verschließt.

8. Verfahren zur Herstellung einer Fahrzeugtür nach einem der Ansprüche 1 bis 6, **dadurch gekennzeichnet, daß** das mit entsprechenden Durchbrüchen (4-7) versehene, schalenförmig ausgebildete Türinnenblech (1) in ein mindestens aus zwei Werkzeughälften (22,23) bestehendes Spritzgießwerkzeug (21) eingebracht wird, welches nach Schließen der beiden Werkzeughälften (22,23) in der Trennebene den in den Fahrzeuginnenraum ragenden Strukturelementen (9,10') entsprechende Werkzeughohlräume aufweist, welche die Randbereiche des Türinnenbleches (1) mindestens in Teilbereichen überdecken, und daß dann Kunststoff in die Werkzeughohlräume gespritzt wird, so daß gleichzeitig mit dem Kunststoffträgerteil auch die Strukturelemente (9,10') erzeugt und an dem Türinnenblech (1) befestigt werden.

## Claims

1. A vehicle door with a door casing having the following features:
a) the door casing has, on its side facing the interior space of the vehicle, a said inside door panel (1) of a shell-like design, which is closed toward the outside of the vehicle door by a said replaceable outside door shell (2),
b) at least one said plastic support part (8), which is connected to the said inside door panel (1) at discrete connection points via said openings (4) in the said inside door panel (1), through which said openings the said plastic passes and projects over the surfaces of the openings on their reverse side, is injection moulded integrally on the said inside door panel (1) on the side facing the said outside door shell (2);
c) said fastening elements (13) for the door components arranged in the door casing are provided at the said plastic support part (8);
d) said structural elements (9, 10, 10') which protrude into the interior space of the vehicle or are accessible from the interior space of the vehicle are fastened to the said inside door panel (1) in the area of said corresponding openings (5-7) of the said inside door panel (1) so that no moisture can enter the interior space of the vehicle from the door casing.

2. A vehicle door according to Claim 1, **characterised in that** the said plastic support part (8) has reinforcing ribs arranged in a honeycomb pattern.

3. A vehicle door according to Claim 1 or 2, **characterised in that** the dimensions of the said plastic support part (8) are selected to be such that the said plastic support part is limited on the side by the side walls of the said inside door panel (1).

4. A vehicle door according to Claim 1 or 2, **characterised in that** the said fastening elements (13) injection moulded integrally on the said plastic support part (8) are screw domes.

5. A vehicle door according to one of Claims 1 to 4, **characterised in that** a said, dimensionally stable, non-self-supporting inside door lining (17) is arranged on the side facing the interior space of the vehicle for covering the door components protruding into the interior space of the vehicle.

6. A vehicle door according to one of Claims 1 to 5, **characterised in that** the said structural elements (9, 10) fastened to the said inside door panel (1) have said edge areas (15, 16), which are in contact with the side of the said inside door panel (1) facing the said plastic support part (8) and cover the said corresponding openings (5,6)

7. A process for manufacturing a vehicle door according to one of the Claims 1 to 6, **characterised in that** the said structural elements (9, 10) protruding into the interior space of the vehicle are introduced into a said inside door panel (1) of a shell-like design, which is provided with said corresponding openings (4-7), and are provisionally fixed, and that plastic is then injected by injection moulding into the said inside door panel (1) by means of a corresponding moulding die and the said structural elements (9, 10) as well as the plastic support part itself, formed during the injection moulding, are fastened to the said inside door panel (1), wherein the injection pressure is selected to be such that the plastic composition securely seals the gap-like openings that may be present between the said openings (4-7) and the said structural elements (9, 10).

8. A process for manufacturing a vehicle door according to one of the Claims 1 to 6, **characterised in that** the said inside door panel (1) of shell-like design, which is provided with said corresponding openings (4-7), is introduced into a said injection moulding die (21), which comprises at least two said die halves (22, 23) and which has, after the closing of the said two die halves (22, 23), die cavities, which correspond to the said structural elements (9, 10') protruding into the interior space of the vehicle, and which cover the edge areas of the said inside door panel (1) at least in some areas, and that plastic is then injected into the die cavities, so that the said structural elements (9, 10') are also produced and fastened to the said inside door panel (1) simultaneously with the plastic support part.

## Revendications

1. Portière de véhicule avec châssis, **caractérisée en ce que**
a) le châssis présente sur sa face tournée vers l'intérieur du véhicule une tôle intérieure de portière (1) en forme de coquille, qui est fermée vers la face extérieure de la portière de véhicule par une feuille extérieure de portière remplaçable (2),
b) sur la tôle intérieure de portière (1), on a projeté sur la face tournée vers la feuille extérieure de portière (2) au moins une pièce de support en plastique (8), dont l'assemblage avec la tôle intérieure de portière (1) est réalisé en des points d'assemblage discrets à travers des découpes (4) dans la tôle intérieure de portière (1), à travers lesquels le plastique pénètre et sort sur sa face arrière par les faces des découpes;
c) il est prévu sur la pièce de support en plastique (8) des éléments de fixation (13) pour des composants de portière disposés dans le châssis;
d) des éléments de structure (9, 10, 10') pénétrant à l'intérieur du véhicule ou accessibles de l'intérieur du véhicule sont fixés sur cette tôle dans la région de découpes correspondantes (5-7) de la tôle intérieure de portière (1), de telle manière qu'aucune humidité ne puisse pénétrer depuis le châssis dans l'intérieur du véhicule.

2. Portière de véhicule selon la revendication 1, **caractérisée en ce que** la pièce de support en plastique (8) présente des nervures de renforcement disposées en forme d'alvéoles.

3. Portière de véhicule selon la revendication 1 ou 2, **caractérisée en ce que** toutes les dimensions de la pièce de support en plastique (8) sont choisies de telle façon que la pièce de support en plastique soit limitée latéralement par les parois latérales de la tôle intérieure de portière (1).

4. Portière de véhicule selon la revendication 1 ou 2, **caractérisée en ce que** les éléments de fixation (13) projetés sur la pièce de support en plastique (8) sont des dômes de vis.

5. Portière de véhicule selon l'une quelconque des revendications 1 à 4, **caractérisée en ce qu'**un habillage intérieur de portière (17), de forme stable, non autoportant, est disposé sur la tôle intérieure de portière (1), sur la face tournée vers l'intérieur du véhicule, pour masquer les composants de portière pénétrant à l'intérieur du véhicule.

6. Portière de véhicule selon l'une quelconque des revendications 1 à 5, **caractérisée en ce que** les éléments de structure (9, 10) fixés sur la tôle intérieure de portière (1) présentent des zones de bord (15, 16) qui reposent sur la face de la tôle intérieure de portière (1) tournée vers la pièce de support en plastique (8) et recouvrent les découpes correspondantes (5, 6).

7. Procédé pour la fabrication d'une portière de véhicule selon l'une quelconque des revendications 1 à 6, **caractérisé en ce que** l' on introduit et on fixe provisoirement les éléments de structure (9, 10) pénétrant à l'intérieur du véhicule dans une tôle intérieure de portière (1) en forme de coquille, pourvue de découpes correspondantes (4-7), **en ce que** l'on projette ensuite du plastique par moulage sous pression dans la tôle intérieure de portière (1) au moyen d'un outil de moulage correspondant et on fixe sur la tôle intérieure de portière (1) les éléments de structure (9, 10) ainsi que la pièce de support en plastique elle-même formée par le moulage sous pression, la pression de projection étant choisie de telle manière que la masse de plastique obstrue sûrement les ouvertures en forme de fentes existant éventuellement entre les découpes (4-7) et les éléments de structure (9, 10).

8. Procédé de fabrication d'une portière de véhicule selon l'une quelconque des revendications 1 à 6, **caractérisé en ce que** l'on introduit la tôle intérieure de portière (1), en forme de coquille, pourvue de découpes correspondantes (4-7), dans un outil de moulage sous pression (21) se composant d'au moins deux moitiés d'outil (22, 23), qui présente, après la fermeture des deux moitiés d'outil (22, 23) dans le plan de séparation des cavités d'outil correspondant aux éléments de structure (9, 10') pénétrant à l'intérieur du véhicule, qui recouvrent les zones de bord de la tôle intérieure de portière (1), et **en ce que** l'on injecte ensuite du plastique dans les cavités de l'outil, de telle manière que les éléments de structure (9, 10') soient en même temps produits avec la pièce de support en plastique et fixés sur la tôle intérieure de portière (1).
